# EUROPEAN PATENT APPLICATION

(11) **EP 1 932 814 A1**
(43) Date of publication of application: **18.06.2008**
(21) Application number: 06025091.7
(22) Date of filing: 05.12.2006
(51) Int. Cl.: C04B 26/02

(54) **Composition of polymeric concrete**

(71) Applicant: Juarez, Nicolas Fernando Tejada, Mexico City (MX)
(72) Inventor: Juarez, Nicolas Fernando Tejada, Mexico City (MX)
(74) Representative: Blum, Rudolf Emil

(57) **Abstract**

This invention is related to a new composition of Polymeric Concrete which is characterized by the total elimination of Portland cement as an agglutinant or binding agent, and the total elimination of water as a catalyst or hardening agent. In particular, a Polymeric Concrete comprising i) 6.0 to 35 per cent in weight of a polymerization or polycondensation resin; ii) 94.0 to 65.0 per cent in weight of loads or mechanical resistance elements; iii) optionally 0.5 to 5.0 per cent of weight of a catalyst dissolved in dissolvent agents; iv) optionally 1.0 to 6.0 per cent of weight of an accelerator based on soap elaborated with non-hydrosoluble heavy metals dissolved in a dissolving agent; v) optionally 1.0 to 10.0 per cent of weight of ultraviolet ray inhibitors dissolved in a dissolving agent; vi) optionally 1.0 to 15.0 per cent of weight of flame combustion inhibitors dissolved in a dissolving agent; vii) optionally 4.0 to 15.0 per cent of weight integrated colors are disclosed.

## Description

### FIELD OF THE INVENTION

This invention is related to a new composition of Polymeric Concrete which is characterized by the total elimination of Portland cement as an adhesive or agglutination element, as well as the total elimination of water as a catalyst or hardening agent. The product uses a thermostable polymerization or polycondensation resin in percentages that may vary from 6.0 to 35.0 per cent and from 94.0 to 65.0 per cent in load weights or mechanical resistance elements such as fundamental minerals or igneous rocks such as quartz, all kinds or varieties of feldspars or orthose, microcline and plagioclase; nefeline, sodalite, leucite, all kinds or varieties of micas or muscovite, biotite and phlogopite; augite, egirine and hyperstene types or varieties of pyroxenes; all hornblend, arfrendosite and riebeckite and olivine types and varieties of amphiboles, as well as accessory minerals of igneous rocks such as: zircon, sphene, magnetite, ilmenite, oligist, apatite, pirite, ritulium, corindon and garnet. Plutonic rocks such as the different varieties of granite - granodiorite; the different varieties of sienite - monzonite; the different varieties of tonalite - quartz gabbro; the different varieties of diorite - gabbro; the different varieties of peridorite; the different varieties of volcanic rocks such as riolite; the different varieties of trachyte; the different varieties of phonolite; the different varieties of latite and quartz latite; the different varieties of lacite; the different varieties of dacite; the different varieties of andesite; the different varieties of basalt; the different varieties of fragmentary igneous rocks or pyroclastic rocks, volcanic ash and volcanic tuff or dust; the different varieties of pegmatites; the different kinds and varieties of sedimentary rocks; all kinds of sedimentary rocks of mechanical origin such as conglomerates; all kinds of sandy rocks; all varieties of argillaceous slate; all varieties and kinds of sedimentary rocks of chemical origin such as limestone; all varieties and kinds of travertine; all varieties and kinds of evaporites; all varieties and kinds of regional metamorphic rocks; all varieties and kinds of contact metamorphic rocks; also uses chemical elements such as lead in laminate or granulate; metallic fibers, glass fibers; all varieties and kinds of organic fibers, mineral wool, iron or steel slag, glass perlite, ground glass, sea sand, desert sand, aluminum in laminate or granulate, all varieties and kinds and all varieties and kinds of resistance of steel rod; smooth or corrugated steel bars, iron, steel or aluminum shavings; wood shavings, sawdust. Also uses the following refractory materials and their different combinations: magnesite, calcinated magnesite, dolomite, calcinated dolomite, cianite, andalucite, dumortierite, graphite, bauxite, chromite, zircon, amianthus, talc, steatite, kaolinite and clays.

The resins used in the composition of this invention are liquid polymerization and polycondensation resins, although polymerization resins are preferred. The kinds of polymerization resins that may be used include: epoxy resins, unsaturated polyester resins, acrylic resins, polyurethane resins, silicon resins. The polycondensation resins that may be used can be: furanic resins, phenol-formaldehyde resins, urea-formaldehyde resins and melamine-formaldehyde tri-methylol-melamine amino-resins.

### DESCRIPTION OF THE INVENTION

### COMPOSITION OF POLYMERIC CONCRETE

### 1.0 Background

The constant developments in the field of civil engineering and the growth of industrial activity have created a constant demand for materials for the construction industry that do more and more to comply with structural requirements and meet demands for stricter working and environmental environments.

Traditionally, mechanical force has been the main criterion used when choosing building materials. Structures are taller, while structural elements are used in wider spaces and are growing along with a reduction in weight and size of cross sections or nodules in structural elements.

Technological developments in the calculation and design of structures, as well as the development of new materials, have made it possible to increase the load capacity in bridges and structures: highway and railway bridges currently used by conventional transportation means have been modified in some cases in order to increase their load capacity, with these increases being mainly due to the application of reinforced steel with a greater load capacity in the form of steel ropes (pre-tensed or post-tensed cables) without altering the original structure and, in the case of new large bridges, the use of high-resistance Portland cement (f'c = 350 kg/cm2) in prefabricated elements and the aforementioned reinforced steel.

As a result of the modification implemented in the General Regulations of Construction for Mexico City, Federal District, and applied to other seismic zones of Mexico, as of 1985 structural designs have changed significantly in the case of tall and small structures for public or private use (offices and housing).

Tall structures that already existed in 1986 have been subjected to structural modifications and reinforcements ranging from the load capacity of their foundations and increases in beam, column and slab sections to the use of load bearing walls made of high-resistance reinforced concrete and bracing structures (diagonal beam-column node to node sections designed to strengthen the structure against cutting forces) both inside and outside each level.

New structures built as of 1993 have increased considerably the use of reinforced steel per meter of structural element, both in terms of diameter and of kilograms per meter, while sections such as beams and columns are thicker and slabs between floors are lighter due to the use of steel in a permanent framework (steel slabs) and tighter and greater diameter in steel mesh in framework. In all cases high-resistance concrete is specified as f'c = 350 kg/cm2.

In structures with up to four levels of housing (Mexican Housing Fund, Infonavit), the use of reinforced steel in structural elements has increased, while the use of multiperforated annealed brick is fomented in order to use intermediate structural elements in load bearing walls along with joint reinforcements each three rows, with the reinforcements being attached to each structural element. Floor slabs are thicker and the diameter and size of mesh used is also being modified; the specification of concrete has changed to f'c = 240 kg/cm2, while the mortar used to bind bricks is stronger with a proportion of 3 to 1.

In all cases, including existing structures, mechanical ground studies aimed at determining foundation reinforcements are compulsory.

High-resistance concrete should mean not just high resistance to tension with regard to resistance to compression, but also resistance to existing environmental agents and water and aggregates used as well as the working conditions and place of work or elaboration of said place of work.

Structure deterioration and faults are not only due to problems of calculation and/or design or mechanical resistance faults of the materials used or errors in ground mechanics, but also to the construction processes used and the durability of materials and in this case in particular, the chemical resistance to the actual materials and/or modifying chemical agents (additives).

### 2.0 Objective

The need for low-cost productive processes related to the construction field that enable the possibility of availability of the work or prefabricated element in as little time as possible creates the demand for a material with a short setting time without the need for highly-specialized aggregates or loads or chemical modifiers or prior or posterior reprocesses of supplies or materials or "strengtheners" and that allow the installations developed for the materials prevailing in this market to be used with as few changes as possible.

The use of water as a catalyst or hardening agent in the prefabrication of high-resistance Portland concrete requires a significant additional cost as well as the need for the concrete to be made potable or purified, while its availability at the work site or fabrication and additional treatment in the case of steam "strengtheners" and the return of the duly treated water as industrial waste should also be considered.

An ideal material can be described as one that fulfils one or more of the following, preferably all, requirements: It has a high mechanical resistance and whose resistance to tension and compression can be established within a wide range of working conditions in accordance with the service conditions or requests for force with a high chemical resistance and resistance to inclemency and pollution; that may be modified in accordance with its use; that provides guarantees regarding the quality of the materials to be used in the work or plant; that does not use water as a catalyst; that is ductile; that does not require further treatments or reprocesses to accelerate its availability; that can be used in any atmospheric climate or condition; that does not require the use of "cold joints" in order to be strengthened in a different period of time, with minimum contractions, whose use represents a general saving in costs; that allows the reduction of thicknesses without causing structural risks; that allows the use of less reinforced steel and that will not cause the aforementioned reinforced steel to rust, and / or that is recyclable.

The developed composition as claimed in claim 1 and the dependent claims fulfils one or more, preferably all of the above requirements.

### 3.0 Methodology

The initial point of the research and development was determined as obtaining in a laboratory environment a cementant that is not soluble in water and that can use its own base product as vehicle or dissolvent. In this particular case, tests with several different monomers were carried out as said monomers are molecules or compounds that tend to contain carbon and have low molecular weights and simple chemical structures, and are susceptible to become polymers, plastics, synthetic resins or elastomers through being combined with their own molecules or other similar molecule compounds.

A variety of tests were therefore carried out with different polycondensation and/or polymerization products of dicarboxylic acids with dihydroxide alcohols and drying oils and ethylenic insaturation; vinyl chloride, methyl metacrilate, adipic acid, hexametilendiamine, ethylene glycols, propylene, diethylene, dipropylene, phthalic acid, adipic acid, furfuryl alcohol, furfural, melamine and formaldehyde amino-resins, urea, phenol, paratoluensulphonic acid, benzensulphonic acid, tri-methylol-melamine, methylol-melamine, hydroxifenilbenzotriazol, oligomeric chloroalkyl phosphate, methyl dimethyl phosphate, phthalate steres, sebacats, adipats, tricresyl phosphate, aluminates, silicon oils, cresols, xylenols, resorcinol, naphthols, hidroxibenzene, pehnolic acid, carbolic acid, oximethylene, formic aldehyde, n-butanol, epichlorohydrin, methylene chloride, styrene monomer, dianhydric pyromellitic, pyromellitic acid, pirrolidine, pentadiene and ciclooctatriene, among others.

From the results of the laboratory tests, the availability of the raw materials for each one of the above was determined, both with regard to original or virgin raw material as with recycled materials. Thermofixed plastics (packaging, lighters, disposable razors, trash bags, soda bottles, packaging, etc.) and some derivates of adipic acid represent a considerable volume of non-industrial waste and are non-biodegradable.

The above materials, having been cleaned and milled, were used in 30.0 per cent of the fabrication of the new alkidic-style polycondensation resin of dicarborxylic acids with dihydroxide alcohols, and it was established that using the original styrene monomer solvent as a diluting agent and chemically reprocessing until a high polymer resulting from a chemical reaction in presence of heat and the catalysts sebecat, adipat, dietilenglicol and tricresylic phosphate is obtained. This resin was modified during the process with hydroxiphenylbenzotriazols and chloroalkyl oligomer phosphates and methyl dimethyl phosphates.

The product obtained could be classified as an ethylenical insaturation orthophtalic phosphate that is compatible with unsaturated isophtalic resins.

A number of absorption tests were carried out with the determined resin using different rocky aggregates in non-metallic minerals, synthetic and organic fibers, sea sand, desert sand, diatomaceous earth, potassic and sodic feldspars, pieces of glass and perlite of the same material and also with different combinations of all the above materials with metallic minerals, including pirite, as well as non-biodegradable waste matter or recyclable matter such as steel slag.

The results obtained determined the hiring of the services of the Instituto de Ingenieria de la Universidad Nacional Autónoma de México (National Autonomous University of Mexico Engineering Institute) in order to provide scientific validation of the results by virtue of the need to establish the corresponding standards.

Using the results of different tests, a commitment was established with the Instituto Tecnológico y de Estudios Superiores de Monterrey, Campus Atizapán Estado de México (Atizapán Mexico State Campus of the Institute of Technology and Higher Studies of Monterrey) in order to develop the aforementioned standards.

### 4.0 Design of the Experiment

In accordance with the National Autonomous University of Mexico Institute of Engineering, 500 examples of 15.0 by 30.0 cm cylinders made of Polymeric Concrete were elaborated, 50 of which included limestone gravel and gray sand, raw and without granulometers; 50 examples of the same materials with granulometers similar to those used in the elaboration of Portland cement; 50 examples with basaltic gravel, raw and without granulometers; 50 examples with the same materials with granulometers similar to those used in the elaboration of Portland cement; 50 examples with andesite gravel and gray sand, raw and without granulometers; 50 examples with the same materials with granulometers similar to those used in the elaboration of Portland cement; 50 examples with basaltic gravel and basaltic sand raw and without granulometers; 50 examples with the same materials with granulometers similar to those used in the elaboration of Portland cement; 50 examples with tezontle gravel and gray sand raw without granulometers and 50 examples with the same materials and with granulometers similar to those used in the elaboration of Portland cement.

The above examples were used to determine the resistance to compression, elasticity module, resistance to tension (Brazilian test), plastic dripping or Creep frame, absorption, chemical resistance, electrical conductivity, dielectric resistance, resistance to flame, determination of Barcol hardness, resistance to abrasion, accelerated inclemency, freezing and defrosting tests, adherence to corrugated and smooth iron tests, resistance to post-tensed and pre-tensed and resistance to cutting force in a rigid frame.

As a complement to the above tests, 50 15.0 by 16.0 cm beams were made, 10 with andesite gravel and raw gray sand without granulometers; 10 with the same materials with granulometers similar to those used in the elaboration of Portland cement; 10 with limestone gravel and gray sand without granulometers; 10 with the same materials with granulometers similar to those used in the elaboration of Portland cement; 10 with basaltic gravel and gray sand with granulometers similar to those used in the elaboration of Portland cement and 10 with tezontle gravel and gray sand and granulometers similar to those used in the elaboration of Portland cement.

The above examples were used to carry out the tests corresponding to tension with the beam freely supported two-thirds of the way along their length.

In accordance with the above results, a thousand lightened 7.0 by 14.0 by 28.0 cm bricks and a wall one centimeter thick were manufactured using calcium carbonate and potassic silicate as loads or aggregates.

Several test walls were constructed in the laboratory of the National Autonomous University of Mexico Engineering Institute using the aforementioned bricks, along with a 2.92 by 2.54 meter wall with partition walls made of Portland cement and joints with 1.0 cm grooves. The mortar used was elaborated with Portland cement and a proportion of 1:1/2:4 of Portland cement, cal and gray sand respectively was determined.

The aforementioned wall was subjected to cyclical cutting forces, the results of which demonstrate that the bricks possess a great resistance to compression.

At the same time as the above tests were carried out, the adherence of Polymeric Concrete to hardened Portland concrete was determined, as well as the restoration of hardened Portland concrete after cracking, fractures or lixiviation.

In order to perform the above tests, three natural-size beam - column joint nodes were created, in one of which the soldered plaque process was modified by steel and connected to then pour Polymeric Concrete with a resistance of f'c = 1800 kg/cm2. In the second example the soldered plaque process was not modified and Polymeric Concrete with the same resistance to compression was poured. In the third example the plaque soldering process was carried out along with the installation of steel connectors in order to the pour Polymeric Concrete with the same resistance to compression.

As in the case of the wall described above, the three aforementioned examples were subjected to cyclical cutting force loads, and registered failures at 84, 87 and 96 tons of lateral load respectively at the joint of Polymeric Concrete with the Portland concrete, with the final example reporting a number of fractures and crumbling, while the Polymeric Concrete registered fissures caused by the steel flexion force.

The Polymeric Concrete used in the above test corresponds to the formulation determined with basaltic gravel and gray sand with granulometers. The aforementioned tests were supervised by personnel from the National Autonomous University of Mexico Institute of Engineering.

In order to develop the adherence tests of the Polymeric Concrete to hardened Portland concrete and Portland concrete to Polymeric Concrete, six 15.0 x 30.0 cm cylinders made of Polymeric Concrete and basaltic gravel and gray sand were elaborated without granulometers for a nominal resistance to compression of f'c = 1200 kg/cm2. The cylinders were cut in half at an angle of 45° fifteen days after being cast, and the twelve halves were placed in metallic 15.0 x 30.0 cm cylinder moulds over which a mixture of Portland concrete for a nominal resistance to compression of f'c = 350 kg/cm2 was poured, and then subjected to a steam hardening process for four hours and then sent to the National Autonomous University of Mexico Institute of Engineering to be assessed.

In order to perform the inverse test, nine 15.0 x 30.0 cm cylinders were cast with Portland concrete with a nominal resistance to compression of f'c = 350 kg/cm2. These cylinders were subjected to steam hardening for eight hours and fifteen days later were cut in half at an angle of 45°. The 18 halves were placed in metallic 15.0 x 30.0 cm moulds on which Polymeric Concrete with a nominal resistance to compression of f'c = 1200 kg/cm2 was cast. These cylinders were not subjected to any kind of steam hardening process, and were then sent to the National Autonomous University of Mexico Institute of Engineering for assessment.

In all cases the typical failure exists at the part cast with Portland concrete which is transmitted to the area cast with Polymeric Concrete, with no displacement caused by lack of adherence being shown between the two concretes at the point of union. The report issued by the National Autonomous University of Mexico Institute of Engineering concludes that the typical compression failure is initially generated through the hydraulic concrete and then transmitted to the polymeric concrete.

On request by the General Directorate of Federal Highways of the Ministry of Communications and Transport, a 21.0 meter-long AASHTO IV with a 1.15-meter stilt was manufactured with Polymeric Concrete with a nominal resistance to compression of f'c = 1200 kg/cm2. This structural element was instrumented with gauges to measure its deformations and recuperation with cyclical punctual loads for which three hydraulic jacks, each with a capacity of 500 tons provided by the aforementioned Institute were used.

The structural element was manufactured on December 21, 1991, and the mould or intrados was removed three hours after being cast. 14 steel clad ropes with ½" pre-tensed steel cables were used instead of the 36 indicated in the normal specifications of the Ministry. On December 22, 1991, with a hardening time of 14 hours, the first 100-ton test load was applied with the jacks located at two-thirds of the length of the element for a period of four hours, during which time the deformations were measured. When the load on the jacks was cancelled, a punctual load equivalent to 150 tons was applied to the center of the element for a period of four hours, with the deformations and recovery of the camber being measured until the original position, which was obtained three minutes after the load was cancelled.

Six 15.0 x 30.0 cm cylinders made of Polymeric Concrete were also manufactured for the aforementioned government office, in this case boulders and river sand were used as rocky aggregates. The cylinders were sent to the General Directorate of Technical Support Services (laboratories) of the aforementioned office to be assessed. The resistance to compression and other characteristics of this formulation have not been determined as of the time of writing, despite the fact that the test machine has a capacity of 500 tons. The preliminary analyses of the center estimate a resistance to compression between 4,000 and 4,500 kg/cm2.

### 5.0 Results

The chemical resistance of Polymeric Concrete to most aggressive agents in the environment is excellent and, if required, may be modified by any specific work without affecting its original characteristics.

### PHYSICAL - CHEMICAL - MECHANICAL PROPERTIES

### COMPARATIVE OF POLYMERIC CONCRETE TO PORTLAND CONCRETE

| **Characteristics** | **Unit** | **Polymeric** | **Portland** |
|---|---|---|---|
| Density | Kg / cubic m. | 1200 - 2000 | 2300 - 2400 |
| Lineal contraction in hardening | % | 0.03 - 0.10 | 0.5 - 2.3 |
| Resistance to compression | Kg. / square cm. | 1200 - 3800 | 140 - 400 |
| Resistance to flexion * | Kg. / square cm. | 190 - 280 | 14 - 16 |
| Resistance to tension ** | Kg. / square cm. | 120 - 160 | max. 20 |
| Elasticity module | Square root of f'c | 10000 - 15000 | 7000 -10000 |
| Final compression force | | | |
| | % | 12 | 2 - 3.5 |
| Lineal portion of the | | | |
| deformation curve | Kg. / cm. square | 0.6 - 0.75 | 0.1 - 0.3 |
| Abrasion (Boehme disc) | | | |
| | cm. | 0.10 - 0.35 | 2.0 - 8.0 |
| Specific dripping | | | |
| (compression) | 10 Mpa. | 35 -180 | 45 - 300 |
| Adherence to steel | | | |
| (cutting) | Kg. / cm. | 80 - 180 | 15 - 17 |
| Thermal expansion | | | |
| proportion (lineal) | 10 / K | 6.0 - 9.5 | 10.5 - 12.5 |
| Final working | | | |
| temperature | Degrees centigrade | 1280 - 1832 | 220 - 250 |
| Water absorption | % weight | 0.01 - 0.014 | 16.0 - 26.0 |
| Resistance to corrosion | | | |
| | *** | Excellent | Poor |
| Resistance to acids | | | |
| | *** | Excellent | Poor |
| Resistance to alkalis | | | |
| | *** | Excellent | Average |
| Availability at maximum | | | |
| load | Days | 0.75 | 14.0 - 28.0 |
| | | | 96.0 - |
| Removal of centering | Hours | 3.0 - 4.5 | 336.0 |
| Loss of weight due to freezing and unfreezing | | | |
| (from - 40.0 to + 60 °C) 1000 cycle test | % weight loss | 0.01 | 23.0 - 29.0 |

| | | | |
|---|---|---|---|
| * beam freely supported at 2/3 of length ** "Brazilian" tension test | | | |

Tests carried out in the National Autonomous University of Mexico Institute of Engineering
Mixtures made up of aggregates from metropolitan area of Mexico City
Percentage of resin used 15.0 % in Polymeric Concrete
520.0 kg. of Portland cement per cubic meter of Portland Concrete

| **DETERMINATION** | **% (VOLUME)** | **% (WEIGHT)** |
|---|---|---|
| Saturated sodium phosphate | 0.63 | 0.9 |
| 5.0 % sodium phosphate | 0.6 | 0.39 |
| 10.0 % sodium phosphate | 0.6 | 0.35 |
| Saturated ammonium nitrate | 0.25 | 0.91 |
| 5.0 % ammonium nitrate | 0.16 | 0.34 |
| Saturated cupric nitrate | 0.25 | 0.39 |
| Saturated cupric chloride | 0.28 | 0.17 |
| 5.0 % cupric chloride | 0.04 | 0.01 |
| 50.0 % sulphuric acid | 0.56 | 1.2 |
| 5.0 % sulphuric acid | 0.18 | 0.37 |
| Concentrated chlorohydric acid | 0.31 | 0.79 |
| 5.0 % chlorohydric acid | 0.12 | 0.28 |
| Concentrated acetic acid | 0.31 | 0.4 |
| 20.0 % ammonium hydroxide | 0.28 | 0.54 |
| Saturated sodium hydroxide | 0.16 | 0.43 |
| Saturated lactic acid | 0.1 | 0.14 |
| Carbon tetrachloride | 0.5 | 0.93 |
| Benzene | 0.41 | 0.88 |
| Nova gasoline | 0 | 0 |
| Ethylic alcohol | 0.43 | 0.48 |
| Saline chamber 72.0 hrs. | 0 | 0 |
| Water absorption | 0.13 | 0 |
| Permeability in water column | 0 | 0 |

The time required to obtain the optimum available service of any development with Polymeric Concrete is normally no greater than eight hours, which allows the removal of molding or intrados after three hours or less time if permitted by working conditions.

Three hours after casting, Polymeric Concrete has 70 per cent of its nominal working resistance, while its plastic dripping (Creep mark) in the same period of time is 80.0 per cent, with the remaining percentage being provided throughout its working life, which is estimated to be an average of 100 years in accordance with the tests carried out by the National Autonomous University of Mexico Institute of Engineering. The maximum design load may be applied eight hours after casting.

Unlike Portland concrete, Polymeric Concrete does not use water as a catalyst or dehydration agent, and does not require steam "hardening". Not using water in any of its elaboration processes means that the probable life of the product is not subject to the proportion used and/or purity of the water. After hardening, Polymeric Concrete has a maximum absorption of 0.012 per cent of water.

The clearest advantage of Polymeric Concrete is its wide range of applications, while another is the possibility of producing a construction material with its own controllable special design properties.

Understanding the nature of Polymeric Concrete is the best way to prepare it rationally and make its mixture designs and characteristics more effective. This allows us to understand the main problems of the material and its engineering and its comparison with other compounds, in particular with conventional Portland concrete.

The physical-chemical properties of conventional Portland concrete and its relatively low cost make it an ideal construction material for many applications, despite its many limitations, including its low resistance to corrosion, high permeability, fractures caused by freezing, alkali-aggregate reactivity, lixiviation in presence of carbonated water, crumbling due to heat, low resistance to tension, lack of dielectric resistance, lack of isolation resistance, high manufacturing cost for resistance to compression greater than 400 kg/cm2, use of potable water (without organics, acids, tannic, etc.), use of controlled granulometer rocky aggregates without the presence of lime, dust, organic material, humic, micaceous, reactive alkali, pomitic, sulphuric minerals (pirites), etc.

Polymeric Concrete is a material with a high resistance to compression and which can be modified depending on the aggregates and granulometers used. The resistance to compression of this material using raw andesitic gravel (without granulometer) and gray sand with a maximum proportion of dust (passes 100 mesh) of 10.0 per cent is 1200 kg/cm2, a value that has been assigned to the material as standard resistance.

For the elaboration of mortars, granulometers similar to those used with Portland cement are applied to obtain the same material (gray sand mortars), so reducing the percentage of dust to 8.0 per cent, giving an average resistance to compression of up to 1100 kg/cm2. The aggregates to be used can be pomitic, andesitic, basaltic, micaceous, sulphuric sand, quartz sand, sodic or potassic feldspars, diatomaceous earth, sea sand, desert sand, tezontle, etc.

The main raw ingredient for Polymeric Concrete is an ethylenic insaturation resin induced by a modified unsaturated orthophtalic acid, the percentage of use of which varies from 6.0 to 35.0 per cent of the weight of aggregates, depending on the general absorption characteristics of the materials. Hardening is caused by using phthalate esters, sebecat, poliol adipats, such as dietilenglicol and tricresyl phosphate. It does not require water or Portland cement.

As well as all the above advantages, Polymeric Concrete has a high resistance to tension and breakage with an elasticity module that can vary according to the particular structural requirements of each case, inducing in its formulation the addition of polymers with memory with high resistance to acids, alkalis, aromatics and alphatics. Its maximum resistance to flame may be established at 1800 degrees centigrade for two hours and with excellent resistance to freezing and unfreezing without the presence of fractures or loss of weight. Its volume weight with andesitic or basaltic aggregates is an average of 2000 kg/m3.

Its chemical characteristics also permit the use of the same iron oxide base pigments used in Portland concrete with the advantage of not altering the coloring of the pigments with the passing of time or due to prolonged exposure to sunlight.

Its availability to be required for a maximum load capacity is after 8.0 hours of hardening, and the time can vary from 3.0 minutes (plant processes) to 3.0 hours. In the case of concrete elaborated on site, the time may be slowed or accelerated in accordance with the specific needs of each case.

### 6.0 Definitions and Classification

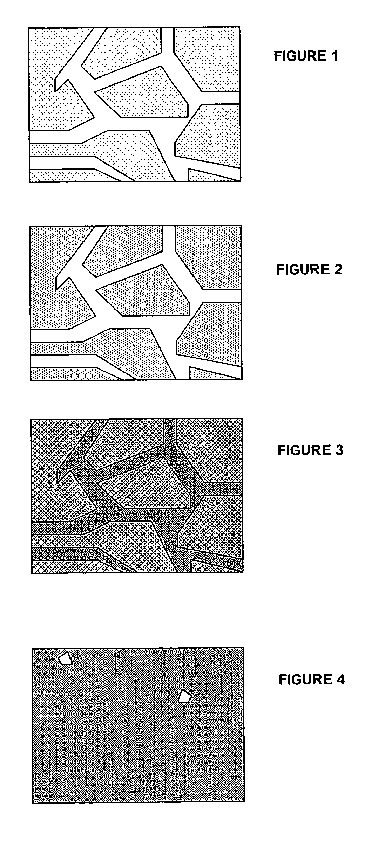

The different compounds of Polymeric Concrete have been classified as follows according to use or application:
Polymeric Concrete Cement (PCC): this material is prepared by adding a polymer or monomer soluble in water to fresh Portland cement to harden it or during the mixture of the cement. For example, marble cement, tile cement, etc., see figure 2, page 1/3 which refers to the structure diagram of the hardened agglutinant pore using Portland Concrete Cement with a polymer soluble in water where the polymer is used as a binding element in a percentage of 15 to 50 per cent of the volume weight and the porosity of the product is 10 to 20 per cent of its volume and where the polymer phase is disperse.
Polymeric Injected Concrete (PIC): this material is prepared by injecting or causing to flow by vacuum or gravity a catalyzed polymer or monomer through cracks, pores or interstices of hardened or pre-hardened Portland concrete. The most common use of this material is in structural recovery (foundations, columns, beams, nodules, etc.) and the recovery of walls or slabs by modifying the physical-chemical-mechanical characteristics of hardened concrete. See figure 3, page 1/3, which refers to the pore structure diagram of hardened agglutinant using pre-hardened Portland Concrete Cement and recovered with a thermostable polymer as binding element with a percentage of 5 to 15 per cent of the volume weight and with a porosity of 5 to 15 per cent of its volume and where the polymer phase is semi-constant.
Polymeric Concrete (PC): this material is prepared by mixing a diluted polymer in a monomer as binding or agglutinant agent for the loads or aggregates, with its hardening or polymerization induced by chemical methods which can be totally controlled with regard to time and environment (marine cast).
Polymeric Concrete compounds differ with regard to the substitution of a polymer by Portland Cement. The function of a modified polymer, as with its form and solid content (liquid or powder), are not the same, and their fundamental differences are the chemical vehicles and catalysts as well as the hardening exothermic temperatures and different chemical reactions such as polycondensation with liberation of water on hardening or polymerization without any secondary product on hardening. See figures 1 and 4, page 1/3, which respectively refer to the diagrams of the pore structure of hardened agglutinant of Portland Concrete Cement, where there is no polymer as binding element and the porosity of the product is 18 to 26 per cent of its volume and the porosity of Polymeric Concrete where loaded polymer to volume weight is 6 to 35 per cent, with this being the only agglutinant used with a porosity of 0 to 0.2 per cent of its volume and where the polymer phase is continuous.

### 7.0. Conclusions

The general concept of Polymeric Concrete compounds through the introduction of the product in cement (currently with polycondensation in Portland concrete) has been carried out in several ways as part of the current practice.

This has defined three kinds of concrete products derived from the use of monomers and polymers as substitute modifying or agglutinant agents: PCC, PIC and PC.

Improvements of mechanical properties have been registered, including increased resistance to compression and resistance to tension and the relationship between the two resistances; better resistance to water and cold and to chemical attacks, among others, are the main results obtained in benefit of hardened Portland concrete and extreme working conditions.

It has been demonstrated that PCC, PIC and PC differ with regard to a wide range of characteristics of Portland cement or concrete, as well as with any other agglutinant such as epoxic or phenolic, furanic or sulphuric cements.

PCC can be described as a modest modifier of modified Portland concrete, in particular of its adherence to the same kind of hardened concrete and in some cases where sealant or filler is used in walls and hydraulic or sanitary installations.

PIC is described as an important structural modifier, and its advantages over Portland concrete can be considered as a lineal extrapolation of the product's physical-chemical-mechanical properties.

PC can be described as a new and different kind of concrete material which is characterized by having a combination of many physical-chemical-mechanical properties that are hard to find in other products and also a combination of many of the aforementioned properties at a low cost.

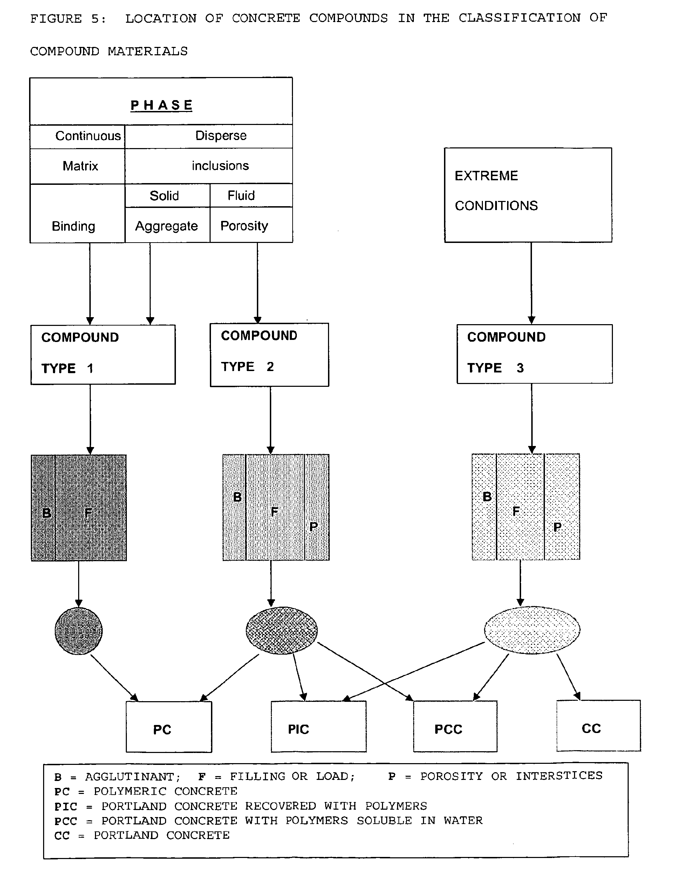

All concretes, both those referred to above and others, have been demonstrated as complementary and have not replaced Portland concrete in the consumer market. Polymer substitutes are compatible in 66 per cent of options and depend on Portland concrete to demonstrate their characteristics (PCC and PIC). Polymeric Concrete (PC) is the only one of the options analyzed capable of substituting conventional Portland concrete, and does so with enormous advantages, both technical and economical. See figure 5, page 3/3.

### 8.0. Bibliography

1. - Czarnecki, L., " Concrete - Polymer Composites " Kunststoffe im bau (Frankfurt Am Main), V. 18, No. 4, 1983, pp 178 - 183 (In German).
2. - Saucier, Kenneth L., " High - Strength Concrete, past, present, future " Concrete International: Design and Construction, V. 2, No. 6, June 1980, pp. 46 - 50.
3. - Proceedings, 2nd International Congress on Polymers in Concrete, University of Texas at Austin, 1978, 640 pp.
4. - Proceedings, 3rd International Congress on Polymers in Concrete, Nihon University, Koriyama, 1981, 1465 pp.
5. - Cady, Philip D., Weyers, Richard E., and Wilson, David T., " Overlays and Bridge Deck Substrate Treatments ", Concrete International: Design and Construction, V. 6, No. 6, June 1984, pp. 36 - 44.
6. - Scalon, John M., " US - USSR Scientific Exchange Program in Field of Polymer Concrete " Proceedings 2nd International Congress on Polymer in Concrete, University of Texas at Austin, 1978, pp 527 - 533.
7. - Bares, Richard A., " Furane Resin Concrete and its Application to Large Diameter Sewer Pipes ", Polymers in Concrete: International Symposium, sp - 58, American Concrete Institute, Detroit, 1978, pp. 41 - 74.

## Claims

1. A composition of Polymeric Concrete comprising i) 6.0 to 35 per cent in weight of a polymerization or polycondensation resin; ii) 94.0 to 65.0 per cent in weight of loads or mechanical resistance elements; iii) optionally 0.5 to 5.0 per cent of weight of a catalyst dissolved in dissolvent agents; iv) optionally 1.0 to 6.0 per cent of weight of an accelerator based on soap elaborated with non-hydrosoluble heavy metals dissolved in a dissolving agent; v) optionally 1.0 to 10.0 per cent of weight of ultraviolet ray inhibitors dissolved in a dissolving agent; vi) optionally 1.0 to 15.0 per cent of weight of flame combustion inhibitors dissolved in a dissolving agent; vii) optionally 4.0 to 15.0 per cent of weight integrated colors selected from the group consisting of metallic oxides and organic colors soluble in a any kind of resin.

2. A composition according to claim 1, wherein the mechanical resistance elements are selected from the group consisting of fundamental minerals in igneous rocks such as quartz, all kinds or varieties of orthose feldspars; nefeline, sodalite, leucite, all kinds or varieties of micas or muscovite, biotite and flogopite; the varieties or kinds of augite, egirine and hyperstene pyroxene; the varieties or kinds of hornbled, afrendsonite and riebeckite and olivine amphiboles, as well as accessory minerals of igneous rocks such as: zircon, sphene, magnetite, ilmenite, oligist, apatite, pirite, rutilium, corindon and garnet; plutonic rocks such as the different varieties of granite - granodiorite; different varieties of sienite - monzonite; different varieties of tonalite - quartz gabbro; different varieties of diorite - gabbro; the different varieties of peridorite; the different varieties of volcanic rock such as riolite; the different varieties of trachyte; the different varieties of phonolite; the different varieties of latite and quartz latite; the different varieties of dacite; the different varieties of andesite; the different varieties of basalt; the different varieties of fragmentary igneous rocks or pyroclastic rocks, volcanic ash and volcanic tuffs or dust; the different varieties of pegmatites; the different kinds and varieties of sedimentary rocks; all kinds of sedimentary rock of mechanical origin such as conglomerates; all kinds of sandstone; all varieties of argillaceous slate; all varieties or kinds of sedimentary rock of chemical origin such as limestone; all varieties or kinds of travertine; all varieties or kinds of evaporites; all varieties or kinds of regional metamorphic rocks; all varieties or kinds of contact metamorphic rocks; further chemical elements such as lead in laminate or granulate; metallic fibers, glass fibers; all varieties or kinds of organic fibers, mineral wool, iron or steel slag, glass perlite, ground glass, sea sand, desert sand, aluminum in laminate or granulate, all varieties or kinds and all varieties and kinds of resistance of steel rods; steel bars, both smooth and corrugated, iron shavings, steel or aluminum; wood shavings, sawdust. Also uses the following refractory materials and their different combinations: magnesite, calcinated magnesite, dolomite, calcinated dolomite, cianite, andalucite, dumortierite, graphite, bauxite, chromite, zircon, amianthus, talc, steatite, kaolinite and clays.

3. The composition of claim 1 or 2 wherein the agglutinant or hardening resin is selected from the group of polymerization resins consisting of: epoxy resin, non-saturated polyester resin, acrylic resin, polyurethane resin, silicon resin and similar resins from the group of ethylene insaturation, including the use of polymers with memory in different combinations such as modifying elements from the elasticity module.

4. The composition of any of the preceeding claims, wherein the polycondensation resin is chosen from the group of furfuryl alcohol, phenol, formaldehyde, melamine, urea and similar resins.

5. The composition of any of the preceeding claims, wherein the loads are chosen from the group consisting of: metallic and non-metallic minerals, organic fibers, mineral fibers, inorganic fibers, corrugated high resistance and normal resistance steel rods, smooth steel bars with different alloys, pre-tensed and post-tensed steel cables, including iron and steel slag, as well as any kind of lead slag, bars and laminates of any thickness, aluminum bars and laminates of any thickness, copper bars and laminates of any thickness, manganese bars and laminates of any thickness and, in general, bars and laminates of any material used as reinforcement or protection, including protection from nuclear radiation.

6. The composition of any of the preceeding claims, wherein the ultraviolet ray inhibitors are chosen from the group of hydroxybiphenylbenzotriazoles.

7. The composition any of the preceeding claims, wherein the combustion or flame inhibitors are chosen from the group of chloroalkyl oligomers phosphates and methyl dimethyl phosphonates, as well as the group of aluminates, potassic aluminates and silicates.

8. The composition of any of the preceeding claims, wherein the resistance elements can be chosen from the group consisting of: bentonite, limestone, tezontle, calcium carbonate, diatomaceous earth, vermiculites, tepojal, tepecil, gray sand, desert sand, sea sand, red sand, perlite, potassic aluminates, pirites, ground glass, glass perlite, jute, cellulose, paper, sawdust, wood shavings, ixtle and similar products.

9. The composition of any of the preceeding claims, wherein after three hours of hardening it contains 70.0 per cent of its nominal design or working resistance but in the same period of time the plastic dripping (Creep mark), is of 80.0 per cent, while the remaining 20.0 per cent being produced throughout its working life which, in accordance with the application of norms ASTM-C-88-76 and NOM C-75-1985, in laboratory, is over 100 years.

10. The composition of any of the preceeding claims, wherein the maximum design or working load may be applied eight hours after setting.

11. The composition of any of the preceeding claims, wherein the loads, resistance elements, resins and special characteristics may be present in the composition, either alone or in combination.
